(19) Europäisches Patentamt / European Patent Office / Office européen des brevets

(11) **EP 2 439 556 B1**

(12) **FASCICULE DE BREVET EUROPEEN**

(45) Date de publication et mention de la délivrance du brevet:
**05.10.2016 Bulletin 2016/40**

(51) Int Cl.:
*G01S 19/10* $^{(2010.01)}$    *G01S 1/32* $^{(2006.01)}$

(21) Numéro de dépôt: **11184330.6**

(22) Date de dépôt: **07.10.2011**

(54) **Procédé d'identification d'émetteurs par un terminal dans un réseau iso-fréquence**

Verfahren zur Identifizierung von Sendern durch ein Terminal in einem Isofrequenznetz

Method for identifying emitters by a terminal in an iso-frequency network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2010 FR 1003997**

(43) Date de publication de la demande:
**11.04.2012 Bulletin 2012/15**

(73) Titulaires:
- **Thales**
  **92400 Courbevoie (FR)**
- **Centre National d'Etudes Spatiales**
  **75001 Paris (FR)**

(72) Inventeurs:
- **Thevenon, Paul**
  **31041 Toulouse (FR)**
- **Cozzazza, Stéphane**
  **31000 Toulouse (FR)**
- **Macabiau, Christophe**
  **31055 Toulouse (FR)**
- **Julien, Olivier**
  **31055 Toulouse (FR)**
- **Ries, Lionel**
  **31041 Toulouse (FR)**
- **Bousquet, Michel**
  **31055 Toulouse (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**US-A1- 2009 070 847    US-A1- 2010 081 451**

- **THEVENON P ET AL: "Positioning principles with a mobile TV system using DVB-SH signals and a Single Frequency Network", DIGITAL SIGNAL PROCESSING, 2009 16TH INTERNATIONAL CONFERENCE ON, IEEE, PISCATAWAY, NJ, USA, 5 juillet 2009 (2009-07-05), pages 1-8, XP031510287, ISBN: 978-1-4244-3297-4**

**Description**

L'invention concerne un procédé d'identification d'émetteurs par un terminal dans un réseau iso-fréquence. Elle s'applique notamment au domaine de la géo-localisation.

Les terminaux mobiles de télécommunications, comme par exemples les téléphones portables ou les ordinateurs portables, sont utilisés de fréquemment pour la mise en oeuvre d'applications requérant des informations précises de localisation. Ainsi, il est habituel que ces terminaux comportent des moyens leur permettant d'estimer le plus précisément possible leur position. Des systèmes de géo-localisation par satellites sont particulièrement utilisés. On peut citer à titre d'exemple le système GPS, acronyme venant de l'expression anglo-saxonne « Global Positionning System ». Pour qu'un système de géo-localisation par satellites fonctionne correctement, il est requis qu'un nombre suffisant de satellites soient visibles par le terminal. Le choix du nombre et de la position des satellites dans la constellation d'un tel système permet de satisfaire à cette contrainte. Il existe néanmoins des situations dans lesquelles le terminal ne peut recevoir des signaux en provenance d'un nombre suffisant de satellites. C'est par exemple le cas dans des centres urbains comprenant des bâtiments de grande taille empêchant la visibilité des satellites par le terminal ou quand le terminal se trouve dans des zones partiellement ou totalement couvertes.

D'autres techniques de géo-localisation peuvent être utilisées et s'appuient notamment sur les caractéristiques des formes d'ondes et des réseaux d'accès de systèmes radio-mobiles tels que le GSM et l'UMTS ou bien s'appuyant sur des systèmes de télécommunications sans fil tels que le Wifi ou le WiMax. Cependant, la précision d'estimation est moins bonne que celle obtenue par les techniques existantes de géo-localisation par satellites.

Les réseaux iso-fréquence, appelés aussi réseaux SFN, acronyme venant de l'expression anglo-saxonne « Single Frequency Network » sont plus rarement utilisés dans le cadre de la géo-localisation. Un réseau SFN est un réseau comprenant une pluralité d'émetteurs et de récepteurs. Dans ce type de réseaux, chaque émetteur transmet le même signal de manière synchronisée et sur une même fréquence porteuse. En l'absence de trajets multiples, un récepteur reçoit plusieurs répliques du même signal provenant de plusieurs émetteurs. Les différentes répliques sont affectées d'une atténuation et d'un retard différents, ladite atténuation et ledit retard dépendant notamment de la distance entre le terminal récepteur et chacun des émetteurs. Ces caractéristiques des réseaux SFN rendent difficiles pour un terminal récepteur d'identifier la provenance d'une réplique du signal, c'est-à-dire d'identifier l'émetteur. La localisation du terminal en utilisant des signaux transmis par les émetteurs d'un réseau est en principe possible sous réserve de pouvoir localiser et identifier lesdits émetteurs.

Le tatouage numérique est une technique connue permettant notamment aux terminaux d'identifier les émetteurs d'un réseau SFN. Cette technique est souvent désignée par le mot anglais « watermarking ». Le principe de cette technique est qu'un signal d'identification de l'émetteur est superposé au signal comportant les données applicatives à destination de l'utilisateur du terminal récepteur. Le signal comportant ces données utilisateur est appelé dans la suite de la description signal utile. Lesdites données utilisateur correspondent par exemple à des flux vidéo associés à des chaînes de télévision. Le signal d'identification est habituellement superposé au signal utile avec une puissance relative très faible, ce qui ne perturbe pas la réception des données utilisateur. Cependant, le signal d'identification est brouillé lorsque l'on s'approche d'un autre émetteur. Cela correspond au phénomène bien connu de l'homme du métier et désigné par l'expression anglo-saxonne « near-far effect ». Dans ce cas, seuls les émetteurs les plus proches peuvent être identifiés. Comme explicité précédemment, pour estimer la position d'un terminal, il est requis d'identifier autant d'émetteurs que possible.

L'article de P. Thevenon et. al intitulé Positioning principles with a mobile TV system using DVB-SH signals and a Single Frequency Network, International Conference on Digital Signal Processing, 2009, IEEE, décrit les principes du positionnement d'un terminal mobile en utilisant les signaux émis par un réseau SFN.

La publication de demande de brevet US 2009/070847 A1 divulgue une méthode de positionnement se basant sur un réseau SFN.

La publication de demande de brevet US 2010/081451 concerne un système permettant la localisation d'un terminal mobile dans un réseau SFN.

Un but de l'invention est notamment de pallier les inconvénients précités.

A cet effet l'invention a pour objet un procédé d'identification d'émetteurs par un terminal dans un réseau iso-fréquence comprenant une pluralité d'émetteurs, lesdits émetteurs étant synchronisés et émettant avec un retard artificiel $\tau_i$ propre à chaque émetteur. Le procédé comporte au moins :

- une étape d'acquisition de la position approximative du terminal $\hat{p}$, de la position $p_i$ d'une liste d'émetteurs {**Tx**} au voisinage du terminal et des retards des retard $\tau_i$ leurs étant associés ;
- une étape de mesures de pseudo-distances $\rho_i$ entre les émetteurs et le terminal ;
- une étape d'association des mesures $\rho_i$ aux émetteurs de positions connues $\rho_i$ en minimisant une fonction de coût, ladite fonction de coût $v(\rho_i, \hat{p}, \sigma)$ correspondant à la norme de l'erreur entre les mesures $\rho_i$ et un modèle de mesures des pseudo-distances appliqué à une permutation de la position des d'émetteurs $\sigma$**.**

Selon un aspect de l'invention, le procédé comporte une étape d'estimation de la position affinée du terminal en utilisant les positions des émetteurs et les pseudo-mesures leurs étant associées.

Les positions $p_i$ et les retards artificiels $\tau_i$ des émetteurs peuvent être mémorisés dans une base de données localisée dans le terminal.

Alternativement, les positions $p_i$ et les retards artificiels $\tau_i$ des émetteurs peuvent être transmises au terminal en utilisant des moyens de télécommunications.

L'acquisition de la position approximative $\hat{p}$ du terminal est, par exemple, le résultat d'estimations réalisées sur des systèmes radio-mobiles tels que le GSM ou l'UMTS.

Il est aussi possible que la position approximative du terminal récepteur corresponde à une position acquise par GPS.

La fonction de coût correspond par exemple à l'expression suivante :

$$v\left(\rho_i, \hat{p}, \boldsymbol{\sigma}\right) = \sum_{i=1}^{card(\boldsymbol{\sigma})} \left( \rho_i - \sqrt{\left(\hat{x} - x_i\right)^2 + \left(\hat{y} - y_i\right)^2} - c \times \tau_i \right)^2$$

dans laquelle :

$\rho_i$ représente la i-ème mesure de pseudo-distances ;
$\hat{p} = [\hat{x}, \hat{y}]$ représente la position approximative du terminal ;
$\sigma$ représente l'ensemble des combinaisons possibles des émetteurs de la liste {**Tx**} ;
$card(\sigma)$ représente le cardinal de $\sigma$ ;
$c$ est une constante représentant la vitesse de la lumière ;
$\tau_i$ correspond au délai artificiel associé au i-ème émetteur.

Selon un aspect de l'invention ; la meilleure combinaison émetteurs-mesures $\hat{\sigma}$ est déterminée en utilisant l'expression :

$$\hat{\sigma} = \underset{\sigma}{arg\,\min}\left[v\left(p, \hat{p}, \boldsymbol{\sigma}\right)\right]$$

dans laquelle :

$\underset{k}{arg\,\min(\ )}$ est une fonction indiquant que la recherche du minimum ne se fait que sur la variable k.

L'invention a aussi pour objets un terminal de télécommunication comprenant des moyens pour recevoir des signaux émis pas les émetteurs d'un réseau iso-fréquence. Ce terminal comporte des moyens pour mettre en oeuvre le procédé d'identification d'émetteurs tel que décrit précédemment.

D'autres caractéristiques et avantages de l'invention apparaîtront à l'aide de la description qui suit donnée à titre illustratif et non limitatif, faite en regard des dessins annexés parmi lesquels :

- la figure 1 illustre le principe d'identification des émetteurs et de géo-localisation d'un terminal dans un réseau iso-fréquence selon l'invention ;
- la figure 2 donne un exemple simple d'application du procédé selon l'invention lorsqu'il n'y a pas d'erreurs d'estimations ;
- la figure 3 donne un exemple simple d'application du procédé selon l'invention en présence d'erreurs d'estimations.

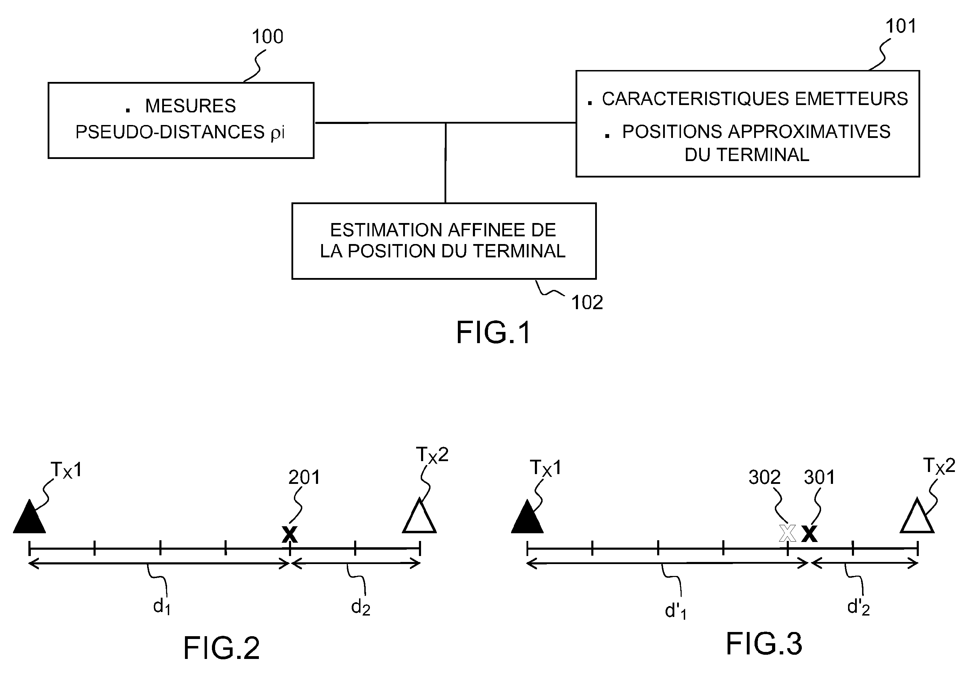

La figure 1 le principe d'identification des émetteurs et de géo-localisation d'un terminal dans un réseau iso-fréquence selon l'invention.

Afin d'éviter que deux répliques de signal en provenance d'un même émetteur arrivent en même temps au niveau du terminal récepteur, le procédé selon l'invention peut être mis en oeuvre pour un réseau SFN dans lequel les émetteurs sont synchronisés, mais où chaque émetteur transmet le signal avec un retard différent, une valeur prédéfinie de retard étant propre à chacun desdits émetteurs. Ces retards sont appelés retards ou délais artificiels dans la suite de la description. Le concept de retards artificiels a été introduit dans la demande de brevet FR1001868.

Afin d'estimer sa position, un terminal réalise des mesures de pseudo-distances $\rho_i$ à partir de signaux reçus en provenance des différents émetteurs du réseau iso-fréquence. Ces pseudo-distances mesurées peuvent être décrites à l'aide de l'expression suivante :

$$\rho_i = h(p, p_i, \tau_i) + n_i \text{ avec } i \in \{\mathbf{Tx}\} \tag{1}$$

Dans laquelle :

$p = [x, y]$ correspond à la position exacte du terminal récepteur ;
$p_i = [x_i, y_i]$ correspond à la position du i-ème émetteur ;
correspond au délai artificiel associé au i-ème émetteur ;
correspond au bruit affectant la mesure de pseudo-distance ;

$h(p, p_i, \tau_i) = \sqrt{(x - x_i)^2 + (y - y_i)^2} + c \times \tau_i$ est la fonction de modélisation de la pseudo-distance ;

$\{\mathbf{Tx}\}$ correspond à la liste des émetteurs pour lesquels une pseudo distance est mesurée.

Sur la base des mesures de pseudo-distances $\rho_i$ seules, il n'est pas possibles d'associer les signaux reçus aux différents émetteurs. En d'autres termes, il n'est pas possible d'identifier quel émetteur a émis une réplique de signal reçue par le terminal récepteur.

Afin d'identifier les émetteurs, le procédé utilise d'une part les mesures de pseudo-distances $\rho_i$ 100 et d'autre des données d'assistance 101 permettant d'identifier la configuration d'émetteurs correspondant à la collection de pseudo-distances mesurées. En effet, de par l'introduction de retards artificiels, une seule combinaison émetteurs/pseudo-distances est possible pour une position donnée du terminal. Chaque mesure de pseudo-distance est ainsi associée sans ambiguïté à un émetteur. Il est alors possible de localiser avec précision le terminal par un simple calcul bien connu de l'homme du métier, les positions des émetteurs et les pseudo-distances leurs étant associées étant connues du terminal.

Plusieurs types de données d'assistance 101 sont utilisés. Ainsi une position approximative du récepteur et la position des émetteurs au voisinage du terminal sont utilisées par le procédé. La fourniture de ces données d'assistance peut être réalisée de différentes manières. Par exemples, les positions et les retards artificiels des émetteurs du réseau iso-fréquence peuvent être mémorisés dans une base de données accessible par le terminal ou bien lui être transmis par voie radio. Pour ce qui est de la position approximative du terminal récepteur, elle peut être le résultat d'estimations réalisées en GSM ou en UMTS. Celle-ci peut aussi être obtenue en utilisant la dernière position estimée par un module GPS avant que celui-ci ne soit plus capable de fonctionner correctement, par exemple lorsqu'il ne dispose pas d'un nombre suffisant de signaux satellites pour effectuer ses estimations.

En résumé, un récepteur dispose alors d'un ensemble de mesures de pseudo-distances 100. Il connaît sa position approximative ainsi que les caractéristiques des émetteurs qui sont dans son voisinage 101, c'est-à-dire leur position ainsi que les valeurs de retards artificiels leurs étant associés.

Sur la base de ces données, pour chaque combinaison d'associations possibles entre les émetteurs et les mesures de pseudo-distances, le récepteur détermine un coût, ce coût étant obtenu à l'aide d'une fonction de coût $v(\ )$.

Le récepteur sélectionne ensuite l'une des combinaisons d'émetteurs possibles. Pour cela, la combinaison d'émetteurs associée au coût minimum est sélectionnée.

La fonction de coût est égale, par exemple, à la norme de l'erreur entre les mesures de pseudo-distances et un modèle de mesures appliqué à une permutation de la position des d'émetteurs.

Une fonction de coût pouvant être utilisée dans le cadre de l'invention est donnée par l'expression suivante :

$$v(\rho_i, \hat{p}, \sigma) = \sum_{i=1}^{card(\sigma)} \left( \rho_i - \sqrt{(\hat{x} - x_i)^2 + (\hat{y} - y_i)^2} - c \times \tau_i \right)^2 \tag{2}$$

dans laquelle :

$\hat{p} = [\hat{x}, \hat{y}]$ représente la position approximative du terminal ;
$\sigma$ représente une des combinaisons possibles des émetteurs de la liste $\{\mathbf{Tx}\}$ ;
$card(\sigma)$ représente le cardinal de $\sigma$ ;
$c$ est une constante représentant la vitesse de la lumière.

La position approximative du terminal $\hat{p}$ peut être obtenue par d'autres moyens de positionnement. Elle correspond par exemples à une estimation GPS antérieure réalisée avant d'entrer dans un bâtiment ou à une estimation sur la base de signaux GSM ou UMTS.

A titre de remarque, si la fonction de coût $v(\rho_i, \hat{p}, \sigma)$ est calculée pour la bonne combinaison $\sigma_v$, lorsque la

position approximative du terminal est égale à sa position réelle, c'est-à-dire lorsque $p = \hat{p}$, et en prenant l'hypothèse que les pseudo-distances sont estimées sans erreur, le coût vaut $v(\rho_i, \hat{p}, \sigma)=0$.

L'estimation de la meilleure combinaison émetteurs-mesures $\hat{\sigma}$ revient à un problème de minimisation de la fonction de coût $v(\rho_i, \hat{p}, \sigma)$ tel que :

$$\hat{\sigma} = \arg\min_{\sigma}\left[v\left(\rho_i, \hat{p}, \boldsymbol{\sigma}\right)\right] \qquad (3)$$

expression dans laquelle : $\arg\min_{k}(\ )$ est une fonction indiquant que la recherche du minimum ne se fait que sur la variable k.

La figure 2 donne un exemple simple d'application du procédé selon l'invention lorsqu'il n'y a pas d'erreur d'estimation. Dans cet exemple, deux émetteurs Tx1 et Tx2 appartenant à un réseau iso-fréquence sont visibles d'un terminal récepteur 201. Le premier émetteur Tx1 est à une distance $d_1$ du terminal et le second émetteur est à une distance $d_2$ du terminal.

Dans cet exemple, il est supposé que la position estimée du terminal est égale à la position vrai, c'est-à-dire $\hat{p} = p$. Il est également pris comme hypothèse que les mesures de pseudo-distances $\rho_1$ et $\rho_2$ sont obtenues sans erreur d'estimation.

Dans cet exemple, il y a deux combinaisons d'émetteurs appelées $\sigma_1$ et $\sigma_2$ à tester :

$\sigma_1$ correspond à la combinaison : émetteur Tx1 associé à la pseudo-distance mesurée $\rho_1$ et émetteur Tx2 associé à la pseudo-distance mesurée $\rho_2$.

$\sigma_2$ correspond à la combinaison : émetteur Tx2 associé à la pseudo-distance mesurée $\rho_1$ et émetteur Tx1 associé à la pseudo-distance mesurée $\rho_2$.

En prenant les valeurs suivantes :

- $d_1$ = 500 m, $d_2$ = 200,
- positions des émetteurs : $x_1$ = -400, $x_2$ = 200, $y_1 = y_2 = 0$,
- position réelle du terminal : $x = y = 0$ m,
- position estimée du terminal $\hat{x} = 0$ m et $\hat{y} = 0$ m car $\hat{p} = p$,
- $c \times \tau_1$ = 100 et $c \times \tau_2$ = 0,
- $\rho_1 = d_2$ et $\rho_2 = d_1$,

on obtient alors les deux coûts suivants déterminés en utilisant la fonction de coût telle que définie par l'expression (2) :

$$v\left(\rho_i, p, \sigma_1\right) = 180000 \quad \text{et} \quad v\left(\rho_i, p, \sigma_2\right) = 0 \qquad (4)$$

La fonction de coût est minimisée pour la combinaison $\sigma_2$, les mesures de pseudo-distances sont alors associées sans ambiguïté aux différents émetteurs du réseau iso-fréquence. Il est alors possible de déterminer avec précision la position du terminal.

On peut noter qu'il est possible d'utiliser l'identification des émetteurs dans un réseau iso-fréquence avec un but autre que celui de positionner des terminaux. A titre d'exemple, cette identification peut être utilisée dans le cadre de la surveillance d'interférences intra-système dans un réseau iso-fréquence à retards artificiels. Cela permet ainsi de déterminer quel émetteur brouille la réception TV dans une zone donnée.

La figure 3 donne un exemple simple d'application du procédé selon l'invention en présence d'erreurs d'estimations.

Dans cet exemple, deux émetteurs Tx1 et Tx2 appartenant à un réseau iso-fréquence sont visibles d'un terminal récepteur 301. Le premier émetteur Tx1 est à une distance $d'_1$ du terminal et le second émetteur est à une distance $d'_2$ du terminal.

La position estimée du terminal 302 n'est pas exacte et est différente de la position vrai, c'est-à-dire $\hat{p} \neq p$. Il est également pris comme hypothèse que les mesures de pseudo-distances $\rho_1$ et $\rho_2$ sont obtenues avec des erreurs d'estimation.

Comme dans l'exemple de la figure 2, il y a deux combinaisons d'émetteurs $\sigma_1$ et $\sigma_2$ à tester :

$\sigma_1$ correspond à la combinaison : émetteur Tx1 associé à la pseudo-distance mesurée $\rho_1$ et émetteur Tx2 associé à la pseudo-distance mesurée $\rho_2$.

$\sigma_2$ correspond à la combinaison : émetteur Tx2 associé à la pseudo-distance mesurée $\rho_1$ et émetteur Tx1 associé à la pseudo-distance mesurée $\rho_2$.

En prenant les valeurs suivantes :

- $d_1$ = 500 m, $d_2$ = 200 m,
- positions des émetteurs : $x_1$ = -400, $x_2$ = 200, $y_1$ = $y_2$ = 0,
- position réelle du terminal : $x = y$ = 0 m,
- position estimée du terminal $\hat{x}$ = 20 m, $\hat{y}$ = 0 m,
- $c \times \tau_1$ = 100 et $c \times \tau_2$ = 0,
- $\rho_1$ = 220 m et $\rho_2$ = 530 m.

on obtient alors les deux coûts déterminés en utilisant la fonction de coût de l'expression (2) :

$$v\left(\rho_i, p, \sigma_1\right) = 212500 \quad \text{et} \quad v\left(\rho_i, p, \sigma_2\right) = 1700 \qquad (5)$$

Malgré les erreurs d'estimation, la fonction de coût est minimisée pour la combinaison $\sigma_2$.

A titre d'exemple, il est possible d'estimer la performance de ce procédé en calculant la différence entre la seconde valeur de coût la plus faible et la valeur de coût la plus faible, c'est-à-dire celle correspondant à la combinaison retenue. Lorsque cette différence est maximisée, cela signifie que les combinaisons émetteurs-mesures sont identifiées avec un faible taux d'erreur. Cette différence est maximisée lorsque les retards artificiels sont choisis de manière à rejeter les zones d'ambigüité en dehors de la couverture des émetteurs. En d'autres termes, l'introduction de retards artificiels rend la signature des mesures du récepteur unique par rapport à une position possible.

Avantageusement, ce procédé est robuste même lorsque les données d'assistance sont de qualité médiocre, comme par exemple lorsque la position approximative des récepteurs comprend une erreur de l'ordre d'une centaine de mètres.

## Revendications

**1.** Procédé d'identification d'émetteurs par un terminal dans un réseau iso-fréquence comprenant une pluralité d'émetteurs, lesdits émetteurs étant synchronisés et émettant avec un retard artificiel $\tau_i$ propre à chaque émetteur. le procédé comportant au moins :

- une étape (100) d'acquisition de la position approximative du terminal $\hat{p}$, de la position $p_i$ d'une liste d'émetteurs {**Tx**} au voisinage du terminal et des retards des retard $\tau_i$ leurs étant associés ;
- une étape (101) de mesures de pseudo-distances $\rho_i$ entre les émetteurs et le terminal ;
- le procédé étant

**caractérisé en ce qu'**il comporte en outre une étape (102) d'association des mesures $\rho_i$ aux émetteurs de positions connues $p_i$ en minimisant une fonction de coût, ladite fonction de coût $v(\rho_i, \hat{p}, \sigma)$ correspondant à la norme de l'erreur entre les mesures $\rho_i$ et un modèle de mesures des pseudo-distances appliqué à une permutation de la position des d'émetteurs $\sigma$.

**2.** Procédé selon la revendication 1 **caractérisé en ce qu'**il comporte une étape d'estimation de la position affinée du terminal en utilisant les positions des émetteurs et les pseudo-mesures leurs étant associées.

**3.** Procédé selon l'une quelconque des revendications précédentes **caractérisé en ce que** les positions $p_i$ et les retards artificiels $\tau_i$ des émetteurs sont mémorisées dans une base de données localisée dans le terminal.

**4.** Procédé selon l'une quelconque des revendications 1 ou 2 **caractérisé en ce que** les positions $p_i$ et les retards artificiels $\tau_i$ des émetteurs sont transmises au terminal en utilisant des moyens de télécommunications.

**5.** Procédé selon l'une quelconque des revendications précédentes **caractérisé en ce que** l'acquisition de la position

approximative $\hat{p}$ du terminal est le résultat d'estimations réalisées sur des systèmes radio-mobiles tels que le GSM ou l'UMTS.

6. Procédé selon l'une quelconque des revendications 1 à 4 **caractérisé en ce que** la position approximative du terminal récepteur correspond à une position acquise par GPS.

7. Procédé selon l'une quelconque des revendications précédentes **caractérisé en ce que** la fonction de coût correspond à l'expression suivante :

$$v\left(\rho_i, \hat{p}, \boldsymbol{\sigma}\right) = \sum_{i=1}^{card(\boldsymbol{\sigma})} \left( \rho_i - \sqrt{\left(\hat{x} - x_i\right)^2 + \left(\hat{y} - y_i\right)^2} - c \times \tau_i \right)^2$$

dans laquelle :

$\rho_i$ représente la i-ème mesure de pseudo-distances ;
$\hat{p} = [\hat{x}, \hat{y}]$ représente la position approximative du terminal ;
$\sigma$ représente l'ensemble des combinaisons possibles des émetteurs de la liste {**Tx**} ;
$card(\sigma)$ représente le cardinal de $\sigma$ ;
$c$ est une constante représentant la vitesse de la lumière ;
$\tau_i$ correspond au délai artificiel associé au i-ème émetteur.

8. Procédé selon l'une quelconque des revendications précédentes **caractérisé en ce que** la meilleure combinaison émetteurs-mesures $\hat{\sigma}$ est déterminée en utilisant l'expression :

$$\hat{\sigma} = \underset{\sigma}{arg\,min}\left[v\left(p, \hat{p}, \boldsymbol{\sigma}\right)\right]$$

dans laquelle :

$\underset{k}{arg\,min}\left(\ \right)$ est une fonction indiquant que la recherche du minimum ne k se fait que sur la variable k.

9. Terminal de télécommunication comprenant des moyens pour recevoir des signaux émis pas les émetteurs d'un réseau iso-fréquence, **caractérisé en ce qu'**il comporte des moyens configurés pour mettre en oeuvre le procédé d'identification d'émetteurs selon l'une quelconque des revendications précédentes.

**Patentansprüche**

1. Verfahren zur Identifizierung von Sendern durch ein Endgerät in einem Isofrequenznetz, umfassend eine Vielzahl von Sendern, wobei die Sender synchronisiert sind und mit einer künstlichen Verzögerung $\tau_i$ senden, die jedem Sender zueigen ist, wobei das Verfahren mindestens umfasst:

- einen Erfassungsschritt (100) der ungefähren Position des Endgeräts $\hat{p}$, der Position $p_i$ einer Liste von Sendern {**Tx**} in der Nähe des Endgeräts und der ihnen zugeordneten Verzögerungen $\tau_i$;
- einen Messschritt (101) von Pseudodistanzen $\rho_i$ zwischen den Sendern und dem Endgerät;
- wobei das Verfahren **dadurch gekennzeichnet ist, dass** es ferner einen Zuordnungsschritt (102) der Messungen $\rho_i$ zu Sendern bekannter Positionen $p_i$ durch Minimieren einer Kostenfunktion aufweist, wobei die Kostenfunktion $v(pi, \hat{p}, \sigma)$ der Norm des Fehlers zwischen den Messungen $\rho_i$ und einem Pseudodistanzmessmodell entspricht, das auf eine Permutation der Position der Sender $\sigma$ angewendet wird.

2. Verfahren nach Anspruch 1, **dadurch gekennzeichnet, dass** es einen Schätzschritt der verfeinerten Position des Endgeräts bei Verwendung der Positionen der Sender und der ihnen zugeordneten Pseudomessungen aufweist.

3. Verfahren nach einem der vorangehenden Ansprüche, **dadurch gekennzeichnet, dass** die Positionen $\rho_i$ und die künstlichen Verzögerungen $\tau_i$ der Sender in einer im Endgerät lokalisierten Datenbank gespeichert werden.

4. Verfahren nach einem der Ansprüche 1 oder 2, **dadurch gekennzeichnet, dass** die Positionen $p_i$ und die künstlichen Verzögerungen $\tau_i$ der Sender an das Endgerät unter Nutzung von Telekommunikationsmitteln übermittelt werden.

5. Verfahren nach einem der vorangehenden Ansprüche, **dadurch gekennzeichnet, dass** die Erfassung der unge-fähren Position $\hat{p}$ des Endgeräts das Ergebnis von Schätzungen ist, die über Mobilfunksysteme wie GSM oder UMTS durchgeführt werden.

6. Verfahren nach einem der Ansprüche 1 bis 4, **dadurch gekennzeichnet, dass** die ungefähre Position des Empfangsendgeräts einer per GPS erfassten Position entspricht.

7. Verfahren nach einem der vorangehenden Ansprüche, **dadurch gekennzeichnet, dass** die Kostenfunktion dem folgenden Ausdruck entspricht:

$$v\left(\rho_i, \hat{p}, \boldsymbol{\sigma}\right) = \sum_{i=1}^{card\,(\boldsymbol{\sigma})} \left(\rho_i - \sqrt{\left(\hat{x} - x_i\right)^2 + \left(\hat{y} - y_i\right)^2} - c \times \tau_i\right)^2.$$

wobei:

$\rho_i$ die i-te Pseudodistanzmessung darstellt;
$\hat{p} =) [\hat{x}, \hat{y}]$ die ungefähre Position des Endgeräts darstellt;
$\sigma$ die Gesamtheit der möglichen Positionen der Sender der Liste {**Tx**} darstellt;
$card(\sigma)$ die Kardinalzahl von $\sigma$ darstellt;
$c$ eine Konstante ist, die die Lichtgeschwindigkeit darstellt;
$\tau_i$ der dem i-ten Sender zugeordneten künstlichen Frist entspricht.

8. Verfahren nach einem der vorangehenden Ansprüche, **dadurch gekennzeichnet, dass** die beste Kombination Sender-Messungen $\hat{\sigma}$ bestimmt wird unter Nutzung des Ausdrucks:

$$\hat{\sigma} = \underset{\sigma}{arg\,\min}\left[v\left(p, \hat{p}, \boldsymbol{\sigma}\right)\right]$$

wobei:

$\underset{k}{arg\,\min}(\ )$ eine Funktion ist die angibt, dass die Suche des Minimums nur über die Variable k erfolgt.

9. Telekommunikationsendgerät, umfassend Mittel, um von den Sendern eines Isofrequenznetzes gesendete Signale zu empfangen, **dadurch gekennzeichnet, dass** es Mittel umfasst, die konfiguriert sind, um das Identifizierungsverfahren von Sendern nach einem der vorangehenden Ansprüche umzusetzen.

**Claims**

1. A method for identifying emitters by a terminal in an iso-frequency network comprising a plurality of emitters, said emitters being synchronised and emitting with an artificial delay $\tau_i$ specific to each emitter, said method comprising at least:

   - a step (100) of acquiting the approximate position of said terminal $\hat{P}$, the position $p_i$ of a list of emitters {**Tx**} in the vicinity of said terminal and the delays $\tau_i$ associated therewith;
   - a step (101) of measuring pseudo-distances $p_i$ between said emitters and said terminal;
   - said method being **characterised in that** it further comprises a step (102) of associating measurements $p_i$ with the emitters of known positions $p_i$ by minimising a cost function, said cost function $v(\rho_i, \hat{p}, \sigma)$ corresponding to the norm of the error between the measurements $p_i$ and a model of pseudo-distance measurements applied to a permutation of the position of said emitters $\sigma$.

2. The method according to claim 1, **characterised in that** it comprises a step of estimating the refined position of said terminal by using the positions of the emitters and the pseudo-measurements associated therewith.

3. The method according to any one of the preceding claims, **characterised in that** the positions $p_i$ and the artificial delays $\tau_i$ of said emitters are stored in a database located in said terminal.

4. The method according to claim 1 or 2, **characterised in that** the positions $p_i$ and the artificial delays $\tau_i$ of said emitters are sent to said terminal using telecommunication means.

5. The method according to any one of the preceding claims, **characterised in that** the acquisition of the approximate position $\hat{p}$ of said terminal is the result of estimations carried out on mobile radio systems such as the GSM or UMTS systems.

6. The method according to any one of claims 1 to 4, **characterised in that** the approximate position of said receiving terminal corresponds to a position acquired by GPS.

7. The method according to any one of the preceding claims, **characterised in that** said cost function corresponds to the following expression:

$$v(\rho_i, \hat{p}, \boldsymbol{\sigma}) = \sum_{i=1}^{card(\boldsymbol{\sigma})} \left( \rho_i - \sqrt{(\hat{x} - x_i)^2 + (\hat{y} - y_i)^2} - c \times \tau_i \right)^2$$

where:

$p_i$ represents the i-th pseudo-distance measurement;
$\hat{p} = [\hat{x}, \hat{y}]$ represents the approximate position of said terminal;
$\sigma$ represents all of the possible combinations of the emitters of said list {**Tx**};
$card(\sigma)$ represents the cardinal of $\sigma$;
$c$ is a constant representing the speed of light;
$\tau_i$ corresponds to the artificial delay associated with the i-th emitter.

8. The method according to any one of the preceding claims, **characterised in that** the best emitters-measurements combination $\hat{\sigma}$ is determined using the following expression:

$$\hat{\sigma} = \underset{\sigma}{arg} \min\left[ v(p, \hat{p}, \boldsymbol{\sigma}) \right]$$

where:

$\underset{k}{arg} \min (\ )$ is a function indicating that the search for the minimum only occurs on the variable k.

9. A telecommunication terminal comprising means for receiving signals emitted by the emitters of an iso-frequency network, **characterised in that** it comprises means configured to implement the method for identifying emitters according to any one of the preceding claims.

FIG.1

FIG.2

FIG.3

EP 2 439 556 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009070847 A1
- US 2010081451 A
- FR 1001868

**Littérature non-brevet citée dans la description**

- Positioning principles with a mobile TV system using DVB-SH signals and a Single Frequency Network. **P. THEVENON.** International Conference on Digital Signal Processing. IEEE, 2009